# EUROPEAN PATENT APPLICATION

(11) **EP 2 565 780 A1**
(43) Date of publication of application: **06.03.2013**
(21) Application number: 12167253.9
(22) Date of filing: 09.05.2012
(51) Int. Cl.: G06F 3/14

(54) **Single-cable bidirectional communication-based touch control display method and system**

(30) Priority: 30.08.2011 TW 100131103
(71) Applicant: Askey Technology (Jiangsu) Ltd., Economic-Technological Development Area Wujiang Jiangsu (CN); Askey Computer Corp., New Taipei City 235 (TW)
(72) Inventor: Peng, Kuo-Chan, 324 Pingzhen City, Taoyuan County (TW); Hsieh, Ching-Feng, 108 Taipei City (TW)
(74) Representative: Bonvicini, Davide

(57) **Abstract**

A single-cable bidirectional communication-based touch control display method and system for enabling communication and transmission between a portable electronic device having a first medium access address and a touch control display device having a second medium access address are provided. The method includes sending a video signal generated by the portable electronic device to the touch control display device via a single transmission cable to display the video signal on the touch control display device; touching, by a user, the touch control display device based on the video signal to generate a touch signal configured as a data packet according to an Internet Protocol frame; and sending the data packet back to the portable electronic device via the transmission cable, such that the portable electronic device retrieves the touch signal from the data packet to generate and feed another video signal back to the touch control display device.

## Description

### FIELD OF THE INVENTION

The present invention relates to displaying methods and systems, and more particularly, to a single-cable bidirectional communication-based touch control display method and system.

### BACKGROUND OF THE INVENTION

In view of small display screens of conventional portable electronic devices, large external displays were developed to take over the role of the small display screens in the conventional portable electronic devices. Due to the wide use of touch control display, users anticipate a means of controlling the portable electronic devices by accessing an external display device directly and performing touch control indirectly.

A conventional way of transmitting a touch signal and a video signal entails providing two transmission lines which separate and independent, wherein one of the two transmission lines enables a display device to display the video signal, and the other one of the two transmission lines sends the touch signal touch-controlled by a user and then generated from the display device, so as to solve the aforesaid problem.

Although the simplest way of transmitting different data is to transmit the data by different transmission lines, doing so incurs costs inevitably. By contrast, transmitting the different data by the same transmission line is confronted with issues pertaining to the necessity for synchronization.

In view of the aforesaid drawbacks of the prior art, the present invention provides a single-cable bidirectional communication-based touch control display method and system with a view to overcoming the aforesaid drawbacks of the prior art.

### SUMMARY OF THE INVENTION

It is an objective of the present invention to provide a single-cable bidirectional communication-based touch control display method and system for effectuating bidirectional data transmission using a single transmission line.

Another objective of the present invention is to provide a single-cable bidirectional communication-based touch control display method and system for effectuating bidirectional transmission of a video signal and a touch signal using the same transmission line.

In order to achieve the above and other objectives, the present invention provides a single-cable bidirectional communication-based touch control display method. The method enables communication and transmission between a portable electronic device having a first medium access address and a touch control display device having a second medium access address. The touch control display device generates a touch signal. The method comprises the steps of: (a) providing a transmission line, followed by connecting the portable electronic device and the touch control display device; (b) generating a video signal by the portable electronic device; (c) transmitting the video signal to the touch control display device by the transmission line, followed by displaying the video signal; (d) configuring the touch signal of the touch control display device based on an Internet Protocol frame; (e) adding the first medium access address and the second medium access address to the touch signal of the Internet Protocol frame so as to form a data packet; (f) sending the data packet to the portable electronic device by the transmission line based on the first medium access address; and (g) analyzing the data packet by the portable electronic device to retrieve the touch signal such that the portable electronic device generates another video signal based on the touch signal.

In order to achieve the above and other objectives, the present invention provides a single-cable bidirectional communication-based touch control display system that comprises a portable electronic device, a transmission unit, a touch control display device, and a packet unit. The portable electronic device has a de-packeting unit and a first connection unit, and outputs a video signal via the first connection unit. The transmission unit has a first transmission end and a second transmission end. The first transmission end is connected to the first connection unit and adapted to transmit the video signal. The touch control display device has a second connection unit, a touch control unit, a display unit, and a packet unit. The second connection unit is connected to the second transmission end. The display unit is adapted to display the video signal. The touch control unit is disposed on the display unit and adapted to generate a touch signal. The packet unit is adapted to package the touch signal based on an Internet Protocol frame to form a data packet and send the data packet to the portable electronic device through the transmission unit. The de-packeting unit analyzes the data packet and retrieves therefrom the touch signal such that the portable electronic device generates another video signal.

Compared with the prior art, the single-cable bidirectional communication-based touch control display method and system of the present invention employs just one transmission line to not only send a video signal from a portable electronic device to a touch control display device and display the video signal thereon, but also send a touch signal from the touch control display device to the portable electronic device, thereby enabling the portable electronic device to perform display and control by means of the touch control display device. Furthermore, another advantage of the present invention is that the video signal and the touch signal which are transmitted on the same transmission line do not interfere with each other.

Accordingly, the method and system of the present invention overcome a drawback of the prior art, that is, the prior art teaches that it is impossible to perform display and control without using a plurality of transmission lines.

### BRIEF DESCRIPTION OF THE DRAWINGS

Objectives, features, and advantages of the present invention are hereunder illustrated with specific embodiments in conjunction with the accompanying drawings, in which:
FIG. 1 is a flow chart of a single-cable bidirectional communication-based touch control display method according to an embodiment of the present invention;
FIG. 2 is a schematic view of the format of a data packet in FIG. 1; and
FIG. 3 is a block diagram of a single-cable bidirectional communication-based touch control display system according to an embodiment of the present invention.

### DETAILED DESCRIPTION OF THE PREFERRED EMBODIMENTS

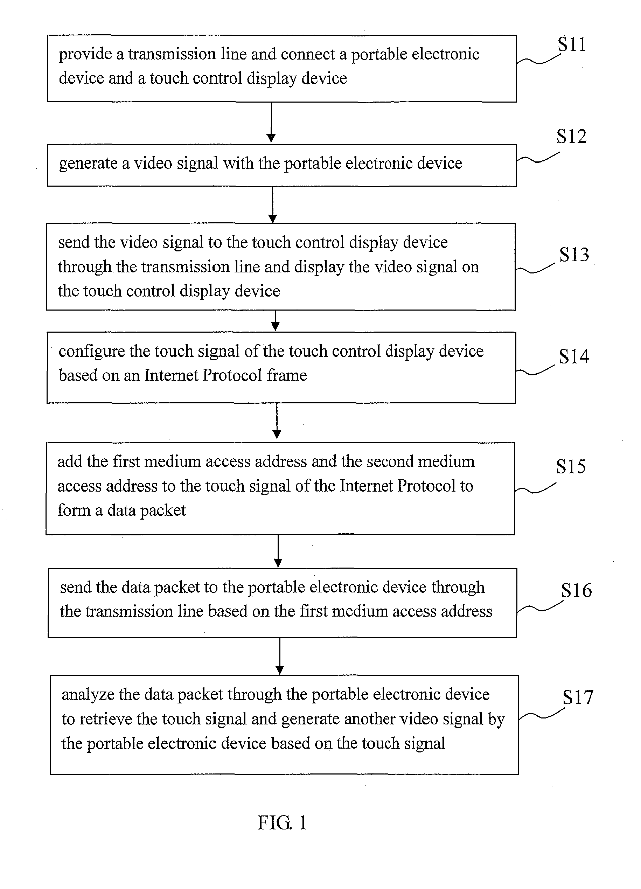

Referring to FIG. 1, there is shown a flow chart of a single-cable bidirectional communication-based touch control display method according to an embodiment of the present invention. As shown in FIG. 1, the single-cable bidirectional communication-based touch control display method comprises the steps of: enabling communication and transmission between a portable electronic device having a first medium access address and a touch control display device having a second medium access address; generating by the touch control display device a touch signal, such as a hardware identifier (also known as media access control (MAC)) solely given as a result of compliance of the first medium access address and the second medium access address in an Ethernet framework. With the first medium access address and the second medium access address, the portable electronic device as well as the control and display device can be recognized, once data is transmitted in the Ethernet framework.

The process flow of the single-cable bidirectional communication-based touch control display method starts from step S11 which involves providing a transmission line and connecting the portable electronic device and the touch control display device. For example, the transmission line is a high-definition multimedia interface (HDMI) transmission line.

Step S12 involves generating a video signal with the portable electronic device. Step S13 involves sending the video signal to the touch control display device through the transmission line and displaying the video signal on the touch control display device, wherein the contents of the video signal are presented to a user through the touch control display device, thereby allowing the user to exercise control, such as Select, Input, and Edit, based on the displayed contents of the video signal.

Step S14 involves configuring the touch signal of the touch control display device based on an Internet Protocol frame. In an embodiment, under an Ethernet framework, the Internet Protocol frame defines at least a destination address field, a source address field, and a data field. The data field holds a data to be transmitted. The destination address field holds an address of a device to which the data is going to be transmitted. The source address field holds an address of a device where the data is currently available.

Furthermore, the user can generate the touch signal by touching a touch control unit (such as a capacitive or resistive touch film) disposed on a portable electronic device.

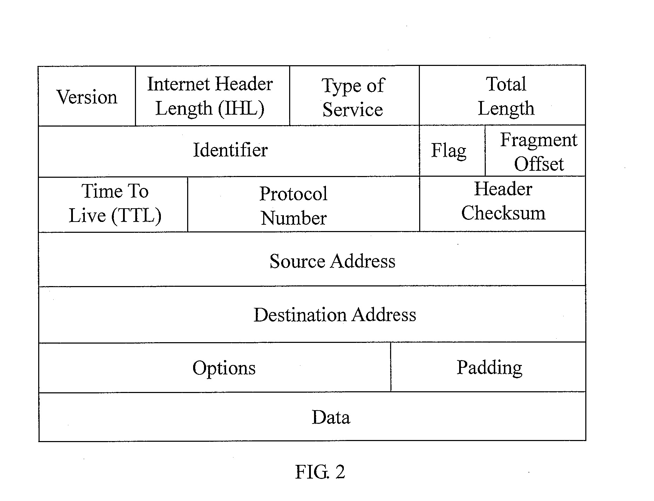

Step S15 involves adding the first medium access address and the second medium access address to the touch signal of the Internet Protocol to form a data packet. For example, under the Ethernet framework, as exemplified by the Internet Protocol version 4 (IPv4), the data packet is illustrated with FIG. 2.

The data packet comprises version, Internet header length (IHL), type of service, total length, identifier, flag, fragment offset, time to live (TTL), protocol number, header checksum, source address, destination address, options, padding, and data. The first medium access address is added to the destination address. The second medium access address is added to the source address. The touch signal is added to the data.

Step S16 involves sending the data packet to the portable electronic device through the transmission line based on the first medium access address. Take the data packet of the IPv4 format as an example, under the Ethernet framework, it is feasible to fetch the touch signal from the touch control display device based on the source address (that is, the first medium access address) in the data packet and send the touch signal to the portable electronic device based on the destination address (that is, the second medium access address).

Step S17 involves analyzing the data packet through the portable electronic device to retrieve the touch signal and generating another video signal by the portable electronic device based on the touch signal. Hence, after receiving the data packet, the portable electronic device analyzes the data packet to retrieve the touch signal from the data packet. Take the data packet of the IPv4 format as an example, the portable electronic device retrieves the touch signal from the data. Besides, the portable electronic device exercises user-anticipated control, such as Select, Input, and Edit, over the contents of the video signal based on the touch signal.

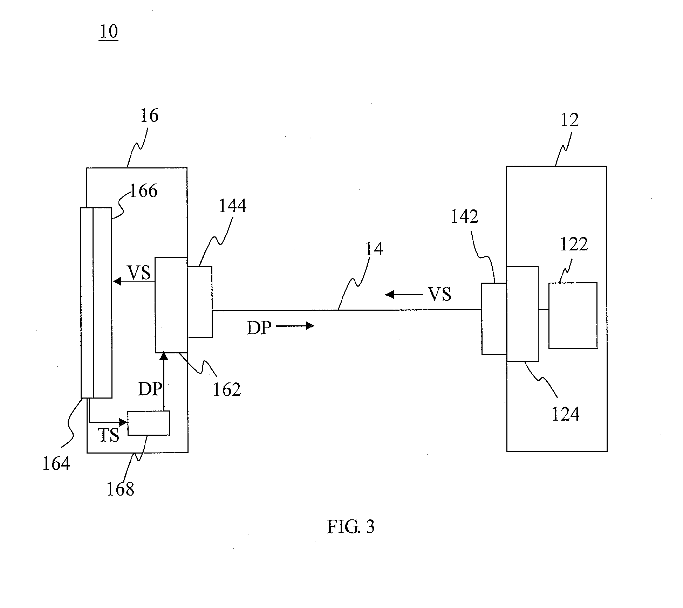

Referring to FIG. 3, there is shown a block diagram of a single-cable bidirectional communication-based touch control display system 10 according to an embodiment of the present invention. As shown in FIG. 3, the single-cable bidirectional communication-based touch control display system 10 comprises a portable electronic device 12, a transmission unit 14, and a touch control display device 16.

The portable electronic device 12 comprises a de-packeting unit 122 and a first connection unit 124. For example, the portable electronic device 12 is a tablet PC or a smartphone. The portable electronic device 12 outputs a video signal VS through the first connection unit 124. The de-packeting unit 122 is a processor for analyzing another data packet such that the portable electronic device 12 generates another video signal accordingly. The first connection unit 124 is a high-definition multimedia interface (HDMI) port. Furthermore, the portable electronic device 12 further comprises the first medium access address.

The transmission unit 14 has a first transmission end 142 and a second transmission end 144. The first transmission end 142 is connected to the first connection unit 124 for sending out the video signal VS. The type of the transmission unit 14 matches the first connection unit 124 and the second connection unit 162 (to be described later). In an embodiment, if the first connection unit 124 and the second connection unit 162 are high-definition multimedia interface (HDMI), the transmission unit 14 will be a single HDMI transmission line.

The touch control display device 16 comprises the second connection unit 162, a touch control unit 164, a display unit 166, and a packet unit 168, wherein the second connection unit 162 is connected to the second transmission end 144.

The display unit 166 displays the video signal VS. For example, the display unit 166 is a liquid crystal display (LCD) panel or an organic light-emitting diode (OLED) display panel.

The touch control 164 is disposed on the display unit 166. The touch control 164 generates a touch signal TS when touched. For example, the touch control 164 is a resistive or capacitive touch film and generates the touch signal TS according to an electrostatic value of the touch film or a pressure applied to the touch film by the user. The second connection unit 162 is a HDMI port. The touch control display device 16 further comprises the second medium access address.

The packet unit 166 is connected to the second connection unit 162 and the second transmission end 144 for packaging the touch signal TS according to the Internet Protocol frame to form a data packet DP and sending the data packet DP to the portable electronic device 12 through the transmission unit 14. The data packet DP is configured according to the Internet Protocol frame as shown in FIG. 2. Furthermore, the data packet DP comprises the touch signal TS, the first medium access address, and the second medium access address. Also, the de-packeting unit 122 analyzes the data packet DP and retrieves therefrom the touch signal TS.

In conclusion, a single-cable bidirectional communication-based touch control display method and system of the present invention involves using just one transmission line to not only send a video signal from a portable electronic device to a touch control display device and display the video signal thereon, but also send a touch signal from the touch control display device to the portable electronic device, such that the touch control display device can display and control the portable electronic device. Another advantage of the present invention is that the video signal and the touch signal which are transmitted on the same transmission line do not interfere with each other. Hence, the method and system of the present invention overcome a drawback of the prior art, that is, the prior art teaches that it is impossible to perform display and control without using a plurality of transmission lines.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A single-cable bidirectional communication-based touch control display method enabling communication and transmission between a portable electronic device having a first medium access address and a touch control display device having a second medium access address, the touch control display device generating a touch signal, the method comprising the steps of:
providing a transmission line, followed by connecting the portable electronic device and the touch control display device;
generating a video signal by the portable electronic device;
transmitting the video signal to the touch control display device by the transmission line, followed by displaying the video signal;
configuring the touch signal of the touch control display device based on an Internet Protocol frame;
adding the first medium access address and the second medium access address to the touch signal of the Internet Protocol frame so as to form a data packet;
sending the data packet to the portable electronic device by the transmission line based on the first medium access address; and
analyzing the data packet by the portable electronic device to retrieve the touch signal such that the portable electronic device generates another video signal based on the touch signal.

2. The single-cable bidirectional communication-based touch control display method of claim 1, wherein the data packet is of a media access control in an Ethernet.

3. A single-cable bidirectional communication-based touch control display system, comprising:
a portable electronic device having a de-packeting unit and a first connection unit, wherein the portable electronic device outputs a video signal via the first connection unit;
a transmission unit having a first transmission end and a second transmission end, the first transmission end being connected to the first connection unit and adapted to transmit the video signal; and
a touch control display device having a second connection unit, a touch control unit, a display unit, and a packet unit, the second connection unit being connected to the second transmission end, the display unit being adapted to display the video signal, the touch control unit being disposed on the display unit and adapted to generate a touch signal, and the packet unit being adapted to package the touch signal based on an Internet Protocol frame to form a data packet and send the data packet to the portable electronic device through the transmission unit,
wherein the de-packeting unit analyzes the data packet and retrieves therefrom the touch signal such that the portable electronic device generates another video signal.

4. The single-cable bidirectional communication-based touch control display system of claim 3, wherein the first connection unit and the second connection unit are high-definition multimedia interface (HDMI) ports.

5. The single-cable bidirectional communication-based touch control display system of claim 3, wherein the transmission unit is a high-definition multimedia interface (HDMI) transmission line.

6. The single-cable bidirectional communication-based touch control display system of claim 3, wherein the data packet is configured based on the Internet Protocol frame.

7. The single-cable bidirectional communication-based touch control display system of claim 3, wherein the portable electronic device further comprises a first medium access address, and the touch control display device further comprises a second medium access address.

8. The single-cable bidirectional communication-based touch control display system of claim 7, wherein the data packet comprises the touch signal, the first medium access address, and the second medium access address.

9. The single-cable bidirectional communication-based touch control display system of claim 3, wherein the de-packeting unit analyzes the data packet having the Internet Protocol frame and retrieves therefrom the touch signal.
